(19) **Europäisches Patentamt**
**European Patent Office**
**Office européen des brevets**

(11) **EP 1 266 521 B1**

(12) **EUROPEAN PATENT SPECIFICATION**

(45) Date of publication and mention
of the grant of the patent:
**22.08.2007 Bulletin 2007/34**

(51) Int Cl.:
**H04N 5/76** *(2006.01)* **G11B 27/10** *(2006.01)*
**H04N 5/44** *(2006.01)*

(21) Application number: **01944307.6**

(22) Date of filing: **06.06.2001**

(86) International application number:
**PCT/US2001/018284**

(87) International publication number:
**WO 2002/058383 (25.07.2002 Gazette 2002/30)**

(54) **SYSTEM AND METHOD FOR PROVIDING MULTI-PERSPECTIVE INSTANT REPLAY**

SYSTEM UND VERFAHREN ZUR SOFORTIGEN WIEDERHOLUNG MIT MEHREREN
PERSPEKTIVEN

SYSTEME ET PROCEDE POUR PERMETTRE UNE REPRODUCTION INSTANTANEE SOUS
PLUSIEURS ANGLES

(84) Designated Contracting States:
**AT BE CH CY DE DK ES FI FR GB GR IE IT LI LU
MC NL PT SE TR**

(30) Priority: **19.01.2001 US 765965**
**02.08.2000 US 630646**
**26.09.2000 US 235529**

(43) Date of publication of application:
**18.12.2002 Bulletin 2002/51**

(73) Proprietor: **OpenTV, Inc.**
**San Francisco CA 94111 (US)**

(72) Inventors:
• **HENSGEN, Debra**
**Portland, Oregon 97228 (US)**

• **PIERRE, Ludovic**
**165-0026 Tokyo (JP)**

(74) Representative: **Freeman, Jacqueline Carol**
**W.P. THOMPSON & CO.**
**55 Drury Lane**
**London WC2B 5SQ (GB)**

(56) References cited:
**EP-A- 0 677 842    EP-A- 0 847 197**
**US-A- 5 371 551    US-A- 5 640 453**
**US-A- 5 995 705    US-A- 5 999 698**
**US-A- 6 147 714**

Description

## FIELD OF THE INVENTION

The present invention relates generally to interactive video delivery mediums such as interactive television, and more particularly, to a system and method for providing multi-perspective instant replay of broadcast material.

## BACKGROUND

A broadcast service provider transmits audio-video streams to a viewer's television. Interactive television systems are capable of displaying text and graphic images in addition to typical audio-video programs. They can also provide a number of services, such as commerce via the television, and other interactive applications to viewers. The interactive television signal can include an interactive portion consisting of application code, data, and signaling information, in addition to audio-video portions. The broadcast service provider can combine any or all of this information into a single signal or several signals for transmission to a receiver connected to the viewer's television or the provider can include only a subset of the information, possibly with resource locators. Such resource locators can be used to indicate alternative sources of interactive and/or audio-video information. For example, the resource locator could take the form of a world wide web universal resource locator (URL).

The television signal is generally compressed prior to transmission and transmitted through typical broadcast media such as cable television (CATV) lines or direct satellite transmission systems. Information referenced by resource locators may be obtained over different media, for example, through an always-on return channel, such as a DOCSIS modem.

A set top box connected to the television controls the interactive functionality of the television. The set top box receives the signal transmitted by the broadcast service provider, separates the interactive portion from the audio-video portion, and decompresses the respective portions of the signal. The set top box uses interactive information to execute an application while the audio-video information is transmitted to the television. Set top boxes typically include only a limited amount of memory. While this memory is sufficient to execute interactive applications, it is typically not adequate to store the applications for an indefinite period of time. Further, the memory of the set top box is typically too small to accommodate a program which includes large amounts of audio or video data, application code, or other information. Storage devices may be coupled to the set top box to provide additional memory for the storage of video and audio broadcast content.

Interactive content such as application code or information relating to television programs is typically broadcast in a repeating format. The pieces of information broadcast in this manner form what is referred to as a "carousel". Repeating transmission of objects in a carousel allows the reception of those objects by a receiver without requiring a return path from the receivers to the server. If a receiver needs a particular piece of information, it can simply wait until the next time that piece of information is broadcast, and then extract the information from the broadcast stream. If the information were not cyclically broadcast, the receiver would have to transmit a request for the information to the server, thus requiring a return path. If a user is initially not interested in the carousel content, but later expresses an interest, the information can be obtained the next time the carousel is broadcast. Since broadcast networks have access only to a limited bandwidth, audio-video content is not broadcast in carousels. There is also insufficient bandwidth and server resources to handle pulling of large amounts of data required for video and audio in real-time to handle near simultaneous requests for broadcast of previously broadcast material from a vast number of television viewers.

In a broadcast by a television network, such as a broadcast of a sporting event, the content provider may generate multiple video feeds from various angles of the game, for example. The network may select one or more feeds from the multiple video feeds and broadcast the selected video feed(s) to the viewing audience at any given point in time. That is, the network may simultaneously broadcast video tracks that present the same scene, except from a different perspective or send different audio tracks or subtitles if a movie is broadcast in different languages, for example. The viewer may use an interactive application that executes on their set top box to choose between different perspectives. When a viewer requests a change in perspective, the interactive application uses meta-data to determine which packets contain the chosen perspective. It starts delivering packets that contain the newly chosen perspective.

As previously described, a viewer cannot request previously broadcast audio or video material due to the limited bandwidth available on broadcast networks. Also, data that accompanies interactive applications sometimes corresponds to audio and video that is currently being broadcast, so it changes frequently. In these cases, the values broadcast as part of the carousel often change and old values are no longer carried in the carousel. Thus a viewer cannot replay a scene or a sporting event play from a different perspective unless the viewer has already recorded the video stream for the alternate perspective.

US 6 678 463 (application 09/630,646) describes a system and a method for incorporating previously broadcast content.

EP 0 847 197 describes seamless reproduction of a bit stream containing noncontinuous system time information using an optical disk on which a plurality of system streams containing mutually-interleaved picture and audio data are recorded smoothly connected to each other.

EP 0 677 842 describes a multi scene recording apparatus in which program chapters or passages are stored on a disk and can be arbitrarily selected on the basis of a data string processing portion.

US 5 999 698 is a multiangle block reproduction system using multiple video images recorded on an optical disk and angle marks in the form of a camera which flashes when there is an option of viewing video reproduction from a different angle.

## SUMMARY OF THE INVENTION

A method and system for providing multi-perspective instant replays are disclosed.

The method of the present invention comprises receiving a broadcast of a program, the broadcast containing a plurality of perspectives of the program; presenting a first perspective of the plurality of perspectives to a viewer, said first perspective comprising a first perspective of a portion of the program; storing at least said first and a second one of the plurality of perspectives; the method characterized by: providing input from a viewer which indicates a desire to replay the portion of the program from a second perspective of the plurality of perspectives; identifying in the first perspective a first point in time in the program which corresponds to the beginning of said portion, responsive to the input; automatically determining a second point in time in the second perspective, wherein the second point in time comprises an approximation of the first point in time in the program; presenting the portion of the program from the second perspective to the viewer beginning at the second point in time; and periodically storing meta-data corresponding to each of said first and second of the received plurality of perspectives of the program, said meta-data comprising at least time and offset information for each of the corresponding said first and second one or more plurality of perspectives; wherein the offset defines a location measured from the beginning of a recording of a corresponding perspective wherein identifying the first point in time in the first perspective comprises identifying a corresponding first offset in a stored file corresponding to the first perspective, and wherein determining the second point in time in the second perspective comprises: searching stored meta-data to identify two consecutive offsets corresponding to the first perspective, such that the interval represented by the two consecutive offsets includes the first offset; utilizing a stored time corresponding to each of the two consecutive offsets to determine by interpolation an approximation of the first point in time; searching stored meta-data to identify two consecutive times corresponding to the second perspective, such that the interval represented by the two consecutive times includes the approximation of the first point in time; utilizing a stored offset corresponding to each of the two consecutive times to determine an approximated offset in the second perspective corresponding to the second point in time.

The method may further include automatically recording the plurality of perspectives in a storage device and playing alternate recorded perspectives for the viewer without interrupting the recording of the broadcast.

A corresponding system and a computer program product is also provided.

The television program may comprise a plurality of related video streams, audio streams, executable code, and data. When appropriate, multiple perspectives may be displayed to a viewer simultaneously by using picture-within-a-picture (PIP) window in a television screen.

A system for recording a broadcast containing a plurality of perspectives of a program generally comprises a receiver operable to receive the broadcast, a storage device coupled to the receiver, and a processor operable to present at least one of the plurality of perspectives to a viewer. The receiver may further be operable to automatically record the plurality of perspectives in the storage device and play the recorded perspective to the viewer without interrupting the recording of the multiple perspectives.

The receiver may be a set top box and the storage device may be contained within the set top box or coupled thereto. The storage device may comprise a magnetic disk, optical disk, or flash memory, for example. The receiver box may include one or more tuners.

Other features, advantages, and embodiments of the invention will be apparent to those skilled in the art from the following description, drawings, and claims.

## BRIEF DESCRIPTION OF THE DRAWINGS

Fig. 1 is a diagram illustrating the distribution of television programs and signaling information from a broadcast station to a receiving station.

Fig. 2 is a block diagram of a system of the present invention for recording programs received from the broadcast station of Fig. 1.

Fig. 3 is a block diagram illustrating the transfer of data to a storage device coupled to the set top box of Fig. 2.

Fig. 4 is a diagram illustrating three video streams and two audio streams simultaneously sent to a receiving station with one of the audio and one of the video streams sent to a television. Those same streams are also sent to a storage device along with one of the other video streams.

Fig. 5 is similar to the diagram of Fig. 4 except that the second video stream is now also displayed in a PIP window along with the first audio and video streams which are displayed in the main picture of the television.

Fig. 6 is a diagram similar to the diagram of Fig. 5 except that the second video stream is now shown in the center of the television screen with the first video stream shown in the PIP window.

Fig. 6a is a diagram similar to the diagram of Fig. 6 except that the configuration shown does not require or use a PIP.

Fig. 7 is a diagram similar to the diagram of Fig. 6 except that the live broadcast of the second video stream is replaced with a previously broadcast version of the same perspective.

Fig. 7a is a diagram similar to the diagram of Fig. 7 except that the configuration shown does not require or use a PIP, and a recorded audio stream is played instead of a live audio stream as in Fig. 7.

Fig. 8 is a diagram illustrating a first video stream and audio stream displayed on a television and recorded along with a second audio stream.

Fig. 9 is a diagram similar to the diagram shown in Fig. 8 except that the first audio stream is replaced with the second audio stream.

Fig. 10 is a diagram similar to the diagram of Fig. 9 except that the first video stream and second audio stream are replaced with earlier broadcast versions.

Fig. 11 illustrates an example of files and data structures on a storage device. The text accompanying Fig. 11 describes how these data structures could be used to facilitate the viewing of an instant replay from a different perspective.

Fig. 12 is a flowchart of a method in accordance with the invention.

Corresponding reference characters indicate corresponding parts throughout the several views of the drawings.

## DETAILED DESCRIPTION OF THE INVENTION

The following description is presented to enable one of ordinary skill in the art to make and use the invention. Descriptions of specific embodiments and applications are provided only as examples and various modifications will be readily apparent to those skilled in the art. The general principles described herein may be applied to other embodiments and applications without departing from the scope of the invention. Thus, the present invention is not to be limited to the embodiments shown, but is to be accorded the widest scope consistent with the principles and features described herein. It will be understood by one skilled in the art that many embodiments are possible, such as the use of a computer system and display to perform the functions and features described herein. For purpose of clarity, the invention will be described in its application to a set top box used with a television, and details relating to technical material that are known in the technical fields related to the invention have not been included.

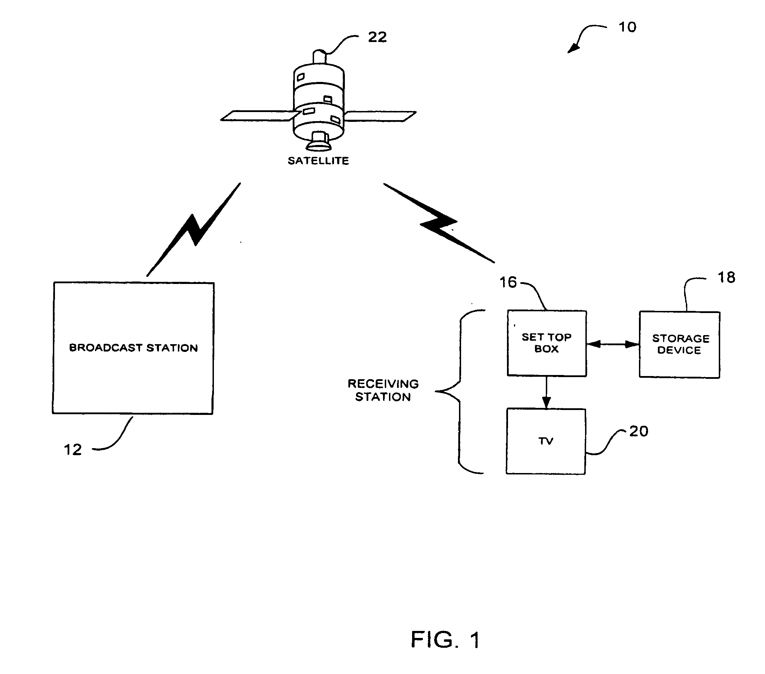

Referring now to the drawings, and first to Fig. 1, a diagram of a television broadcast and receiving system is shown and generally indicated at 10. The system 10 includes a broadcast station 20 where audio-video and control information is assembled in the form of digital data and mapped into digital signals for satellite transmission to a receiving station. Control information such as conditional access information and signaling information (such as a list of services available to user, event names, and schedule of events (start time/date and duration), and program specific information) may be added to video, audio, and interactive applications for use by the interactive television system. Control information can describe relationships between streams, such as which streams can be considered as carrying different perspectives of which other streams. The control information is converted by the broadcast station to a format suitable for transmission over broadcast medium. The data may be formatted into packets, for example, which can be transmitted over a digital satellite network. The packets may be multiplexed with other packets for transmission. The signal is typically compressed prior to transmission and may be transmitted through broadcast channels such as cable television lines or direct satellite transmission systems 22 (as shown in Fig. 1). The Internet, telephone lines, cellular networks, fiber optics, or other terrestrial transmission media may also be used in place of the cable or satellite system for transmitting broadcasts. The broadcaster may embed service information in the broadcast transport stream, and the service information may list each of the elementary stream identifiers and associate with each identifier an encoding that describes the type of the associated stream (e.g., whether it contains video or audio) and a textual description of the stream that can be understood and used by the user to choose between different perspectives, as described below.

The receiving station includes a set top box 16 connected to a storage device 18, and a television 20 which is used to present programs to a viewer. The set top box 16 is operable to decompress the digital data and display programs to a viewer. The decompressed video signals may be converted into analog signals such as NTSC (National Television Standards Committee) format signals for television display. Signals sent to the set top box 16 are filtered and of those that meet the filtering requirements, some are used by the processor 30 immediately and others can be placed in local storage such as RAM. Examples of requirements that would need to be filtered for include a particular value in the location reserved for an elementary stream identifier or an originating network identifier. The set top box 16 may be used to overlay or combine different signals to form the desired display on the viewer's television 20.

As further described below, the set top box 16 is configured to record one or more video and/or audio streams simultaneously to allow a viewer to replay a scene which has recently been viewed or heard by a viewer, except from a different perspective. Broadcast station 12 simultaneously broadcasts multiple perspectives for use by viewers that have set top boxes 16 which execute interactive television applications. For example, multiple cameras may be used to record a sporting event and the station may broadcast from the multiple cameras at the same time to allow the viewer to choose between different camera views using an interactive application that executes on their set top box 16. A broadcaster may also send multiple perspectives of audio tracks in different languages, for example. The multiple video and audio perspectives are only examples of types of perspectives of which a plurality may be contained in a broadcast. Other examples include multiple teletext streams, perhaps in different languages; multiple executables, perhaps each meant for a different skill level; or multiple data streams. The present invention allows a viewer to replay the same scene from a different perspective, while ensuring that the viewer will still be able to view, either simultaneously or at a later time, the portion of the program being broadcast simultaneously with their viewing of the replay. The viewer may request a replay of any combination of audio, video, executables, and data, from either the same or different perspectives as the perspectives previously played.

It is to be understood that the term "program" as used herein refers to any broadcast material including television shows, sporting events, news programs, movies, or any other type of broadcast material, or a segment of the material. The material may include only audio, video, data, or any combination thereof. The program may be only a portion of a television show or broadcast (e.g., without commercials or missing a portion of the beginning or end) or may be more than one show, or include commercials for example. Furthermore, it is to be understood that the term "viewing" as used herein is defined such that viewing of a program begins as soon as a tuner begins filtering data corresponding to a program. If a viewer has tuned to a particular frequency prior to the broadcast of a program, the beginning of the viewing preferably corresponds to the beginning of the program. The viewing preferably ends when the program is complete or when the tuner is no longer filtering the frequency corresponding to the program. Thus, the recording of a program coincides with the "viewing" of a program and the program is only recorded when a tuner is tuned to the station broadcasting the program. In the event that the television display is turned off after a viewer has started recording the program, as long as the tuner is tuned into the station broadcasting the program and a recording of the information broadcast on the same frequencies as those used at the start of the viewing is being made, the viewing is said to continue. The audio-video signals and program control signals received by the set top box 16 correspond to television programs and menu selections that the viewer may access through a user interface. The viewer may control the set top box 16 through an infrared remote control unit, a control panel on the set top box, or a menu displayed on the television screen, for example.

It is to be understood that the system 10 described above and shown in Fig. 1 is only one example of a system used to convey signals to the television 20. The broadcast network system may be different than described herein without departing from the scope of the invention.

The set top box 16 may be used with a receiver or integrated decoder receiver that is capable of decoding video, audio, and data, such as a digital set top box for use with a satellite receiver or satellite integrated decoder receiver that is capable of decoding MPEG video, audio, and data. The set top box 16 may be configured, for example, to receive digital video channels which support broadband communications using Quadrate Amplitude Modulation (QAM) and control channels for two-way signaling and messaging. The digital QAM channels carry compressed and encoded multiprogram MPEG (Motion Picture Expert Group) transport streams. A transport system extracts the desired program from the transport stream and separates the audio, video, and data components, which are routed to devices that process the streams, such as one or more audio decoders, one or more video decoders, and optionally to RAM (or other form of memory) or a hard drive. It is to be understood that the set top box 16 and storage device 18 may be analog, digital, or both analog and digital.

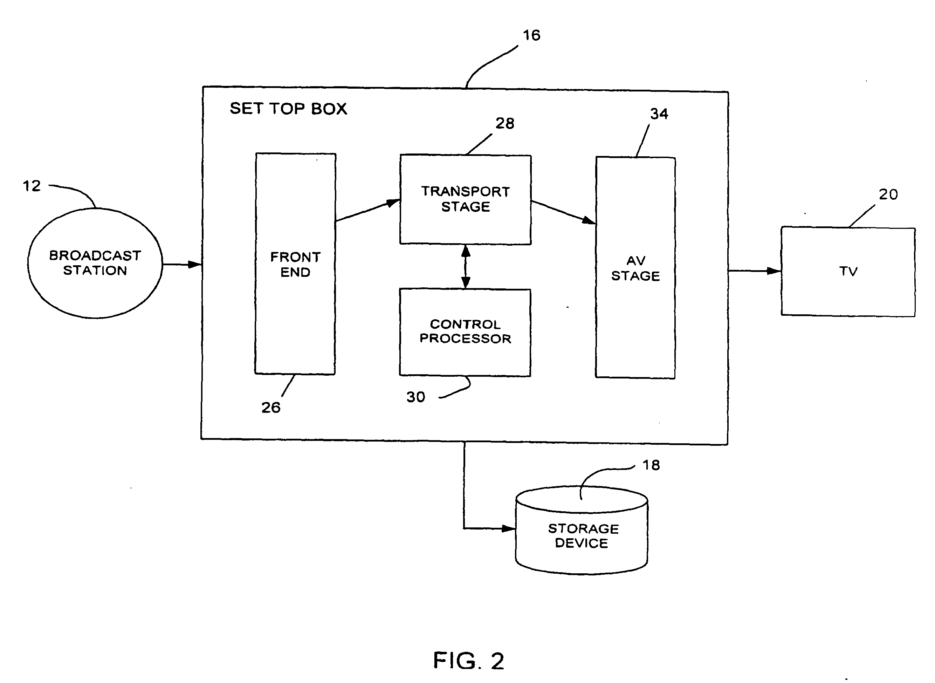

As shown in Figs. 1 and 2, the storage device 18 is coupled to the set top box 16. The storage device 18 is used to provide sufficient storage to record programs that will not fit in the limited amount of main memory (e.g., RAM) typically available in set top boxes. The storage device 18 may comprise any suitable storage device, such as a hard disk drive, a recordable DVD drive, magnetic tape, optical disk, magneto-optical disk, flash memory, or solid state memory, for example. The storage device 18 may be internal to the set top box 16 or connected externally (e.g., through an IEEE 1394-1995 connection) with either a permanent connection of a removable connection. More than one storage device 18 may be attached to the set top box 16. The set top box 16 and/or storage device 18 may also be included in one package with the television set 20.

Fig. 2 illustrates one embodiment of a system of the present invention used to record programs received from the broadcast station 12. The set top box 16 generally includes a control unit (e.g., microprocessor), main memory (e.g., RAM), and other components which are necessary to select and decode the received interactive television signal. As shown in Fig. 2, the set top box 16 includes a front end 26 operable to receive audio, video, and other data from the broadcast station 12. The broadcast source is fed into the set top box 16 at the front end 26, which comprises an analog to digital (A/D) converter and tuner/demodulators (not shown). The front end 26 filters out a particular band of frequencies, demodulates it and converts it to a digital format. The digitized output is then sent to a transport stage 28. The transport stage 28 further processes the data, sending a portion of the data to an audio-visual (AV) stage 34 for display and another portion to the control processor 30, and filtering out the rest of the data.

Control information may also be recorded as broadcast along with the audio-video data or may be first manipulated by software within the set top box 16. For example, broadcast CA (conditional access) information may be used to decrypt broadcast video. The original broadcast streams, or modifications of these streams may be optionally re-encrypted using a set top box key or algorithm prior to recording. The encrypted video may also be stored as received along with the broadcast CA information. Also, clock information may be translated to a virtual time system prior to recording. An MPEG-2 elementary stream may be de-multiplexed from an MPEG-2 transport stream, then encapsulated as a program stream and recorded.

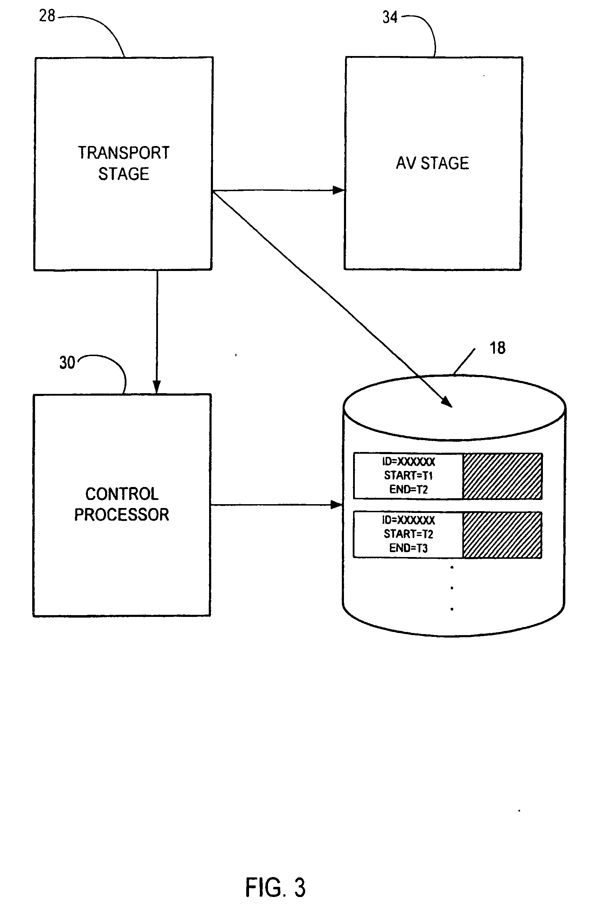

Fig. 3 illustrates the transfer of data from the transport stage 28 to the storage device 18. The storage device 18 typically contains a plurality of programs which have been recorded by a viewer. The recordings of each perspective are associated with identifying information that may have been copied or modified from the original signaling information. This identifying information may contain bookkeeping information similar to that typically stored in audio/video file systems or hierarchical computer file systems. The identifying information may have various formats and content, as long as it provides sufficient information to allow the viewer, possibly interacting with the system, to uniquely retrieve a particular recorded perspective. The programs may be identified with an ID number and a start time and end time. As described below, the storage may be defragmented periodically so that the programs are stored in a contiguous manner. Direct memory access (DMA) is preferably used to send data from the transport stage 28 to the storage device 18. The data that is sent to the control processor 30 may include meta-data which describes the content of the audio-video data streams and may also include application programs and corresponding data that can be executed on the control processor in order to provide interactive television.

A copy of data sent from the transport stage 28 to the AV stage 34 is sent to the storage device 18 at the beginning of the viewing. The CPU in the control processor 30 configures a DMA controller to ensure that the data is written to a buffer that is allocated in the storage device 18. The number of minutes of viewing data to be recorded in the buffer is preferably selected by the viewer; however, the set top box may 16 be preset with a default value such as fifteen minutes. The control processor's CPU calculates the size of the buffer to allocate based upon the number of minutes and the maximum speed at which bits in the transport stream that the viewer is watching will be sent. This maximum speed may be obtained from meta-data sent with the audio-video stream. When the end of the buffer is reached, the CPU in the control processor is interrupted, at which time it will re-configure the DMA controller to start writing at the beginning of the buffer. This design is known as a circular buffer.

The buffer is preferably circular to allow contiguous recording and writing over of previously recorded content. When the viewer changes the channel or a TV event (e.g., television program ends) occurs, the control processor's CPU will be interrupted. At this time, the CPU may allocate a new buffer or mark the beginning of the new event in the original buffer. The automatic recording of a program and all related video, audio, and data streams in a storage device at the start of the program without any action by the viewer, allows the viewer to replay a portion of the program from a different perspective.

As previously described, the control processor 30 records the multi-perspective streams at a start of the program to store the perspectives in storage device 18. The perspectives will continue to be recorded and stored within the storage device 18 for a pre-determined period of time (e.g., 15 minutes). If a viewer decides to record the entire viewing after the start of the program, he will select a record option and the processor 30 will allocate space within the storage device 18. All perspectives will be recorded along with the program that is being viewed. See e.g., U.S. Patent Application Serial No. 09/630,646, entitled "System and Method for Incorporating Previously Broadcast Content" and filed August 2, 2000 (Attorney Docket No. OPTVP013).

The joining of the first and second recorded portions of any given perspective in a common storage area may be implemented either physically or virtually. A physical implementation may include copying the first recorded portion to a location where the second portion has been recorded. A virtual implementation may include the modification of a data structure stored in a storage device. In either case, a viewer watching a replay of any perspective should not be able to detect that the two parts of the perspective were originally stored separately. Thus, the portions of the perspective may be physically contiguous or the portions of the perspective may be stored separately in a non-contiguous format as long as the entire recorded program can be played back in a continuous manner (i.e., viewer does not notice a transition between the playback of the first and second portions of the perspective).

It is to be understood that the recording of the entire program, including the plurality of perspectives, in the storage device 18 may occur without any action by the viewer. For example, if the viewer rewinds (or performs a similar action on different types of storage media) a portion of one of the recorded perspectives to replay a scene, the entire program along with all of its multiple perspectives may be recorded in the storage device, since the viewer has shown interest in the program.

The control information that is broadcast with the program preferably indicates which streams are related to the viewed streams. The set top box 16, by filtering on the appropriate identifiers in the broadcast MPEG-2 (or DSS or other encoding) packets can locate all related elementary streams. It sends the streams that the viewer is watching to the television set 20 and records in the storage device 18 the content of these streams, along with the other related streams, including related video, audio, executables, and data. Meta-data that indicates the maximum bit rate for the streams may accompany the elementary or transport streams. The format of the recorded streams may depend upon the hardware support. For example, special purpose hardware inside the set top box 16 may support re-multiplexing of streams or concurrent reads and writes to the storage device 18, as is well known by those skilled in the art.

Broadcast data such as audio and video data, application code, control signals and other types of information may be sent as data objects. If the program is to be consumed (i.e., presented to the viewer) the broadcast data must be parsed to extract data objects from the stream. When the necessary data objects have been extracted, the program is played. For example, any applications that need to be executed are launched and any audio or video data that needs to be presented to the viewer is played. If the program is stored, the data objects are extracted in the same manner, but they are stored instead of being immediately used to present the program. The recorded program is played back using the stored data objects. The data objects may include "live" data which becomes obsolete if not consumed immediately. If this data is stored and used when the program is played back, the program will in at least part, be obsolete. Thus, while most of the data objects may be stored as files, live data objects may be stored as references in the program. When the program is played back, new live data corresponding to the reference may be obtained and used in place of the data which was live at the time the program was recorded. Thus, only temporally correct data is used by the interactive application when it executes at a later time. (See e.g., U.S. Provisional Patent Application No. 60/162,490 entitled "RECORDING OF PUSH CONTENT" filed October 29, 1999 (Client Docket No. OTV0033+).

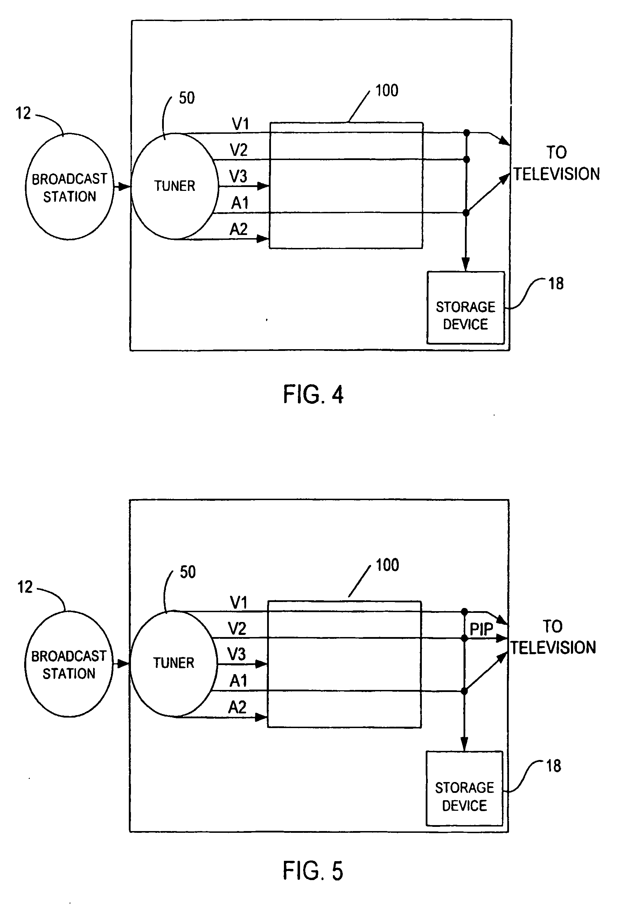

Figs. 4-10 show the set top box 16 receiving three video and two audio streams from the broadcast station 12. The signals are received from the broadcast station 12 at the tuner in front end 26 and related streams are sent to demultiplexer and processor 100. Video streams V1, V2 and audio stream A1 are all related (e.g., video streams are different camera views of a sporting event and A1 is the sound track for the announcer) and can be provided in a single transport stream. If all the related streams are provided in one transport stream only one tuner 50 is required. The set top box 16 may include multiple tuners 50 for recording and displaying related streams broadcast in separate transport streams. Related streams are preferably broadcast on a small number of frequencies so that a large number of tuners will not be required within or attached to the set top box 16. For example, a large number (e.g., five) of video streams along with multiple audio streams, executable programs, data, and control information may be multiplexed together on a single frequency.

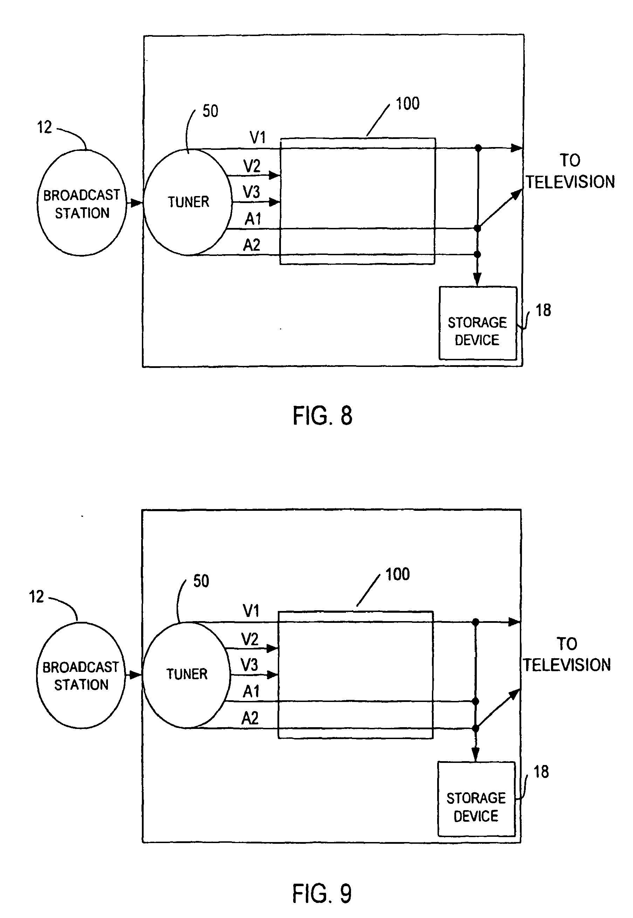

Figs. 4-7 illustrate a case where a viewer requests a replay from a different perspective using a picture-within-picture (PIP) mode. If a viewer wants to see the replay from a different perspective, it can be viewed in a PIP mode without requiring multiple tuners in the set top box 16 or the television 20. The additional tuner is not required since one of the video or audio streams that had been previously recorded is coming from the storage device 18. All streams shown are preferably multiplexed on the same frequency. The video or audio can be delivered directly to the AV stage 34 which is contained in 100 which itself is inside the set top box 16, and may be multiplexed with a transport stream that is being delivered via the tuner 50. Note that 100 represents three components: (i) a demultiplexer; (ii) a processor that directs portions of the broadcast information to other components; and (iii) an AV stage that modulates when necessary (i.e. when the television is analog). Alternatively, the viewer can choose to view only the replay while the set top box 16 buffers, on the storage device 18, the live broadcast for later delivery, as described below with respect to Figs. 8-10.

In Fig. 4, the broadcast station 12 is sending video streams V1 and V2 containing two different perspectives and one audio stream A1. The two video streams may be two different camera positions at a baseball game, for example.

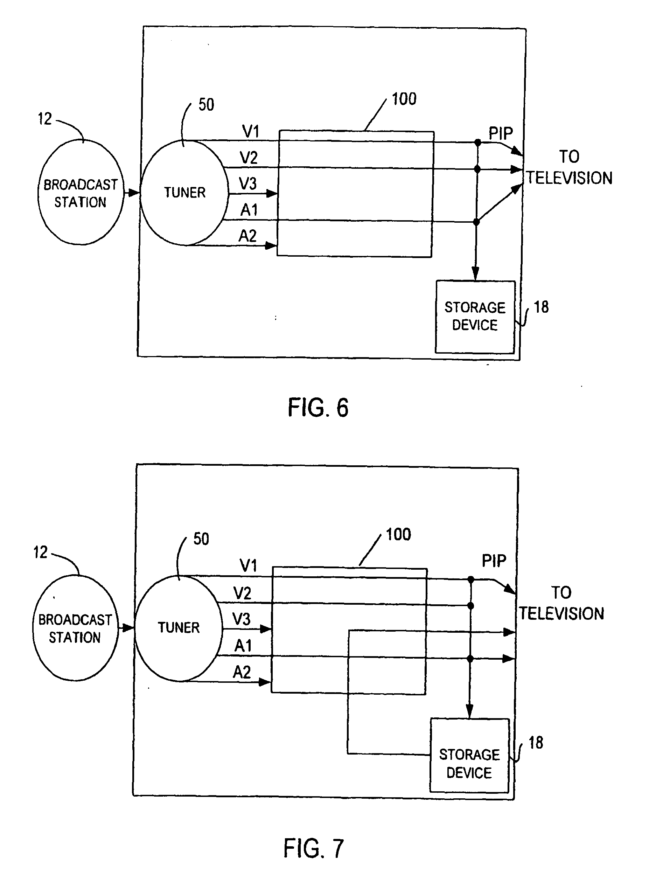

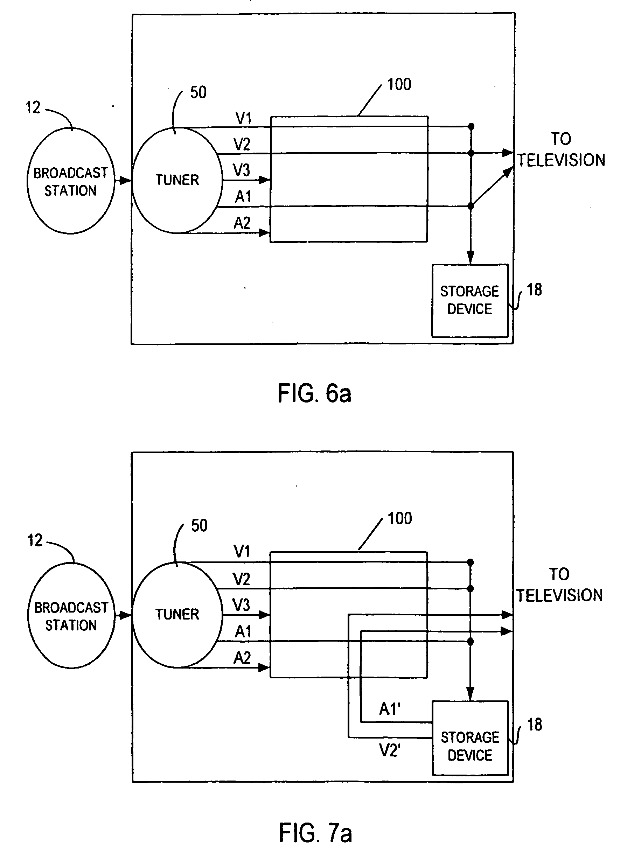

The viewer is currently watching video stream V1 and listening to audio stream A1. The first and second video streams V1 and V2 and the audio stream A1 are automatically recorded. Thus, the previously broadcast information is available if a viewer wants to replay, for example, the last play of the game. In particular, with this invention, the viewer can replay this information from any of the previously broadcast perspectives. The viewer may place the set top box into a PIP mode so that the viewer can see a first perspective (video stream V1) displayed in a large central area in the television screen and a second perspective (video stream V2) displayed in a small picture window in the top right hand corner (or some other area) of the television screen (Fig. 5). After an important play in the game (e.g., double play in a baseball game), the viewer may want to see a replay, this time from a perspective different from the one shown in V1. At this time, the viewer may optionally switch the windows into which the video streams V and V2 are displayed, as shown in Fig. 6. Video stream V1 is now sent to the PIP window and video stream V2 is sent to the central viewing window. Then the viewer would give a command (i.e. press a button on the remote control) to re-wind the video in the main window while permitting the PIP window to continue displaying the "live" V1 in the PIP window.

As shown in Fig. 7, the recorded video stream V2', which is from the same perspective as V2, but which was broadcast and recorded earlier, is sent from the storage device 18 to the demultiplexer in 100 which sends the previously recorded stream V2' along with the current video stream V1 to the television for display. The viewer may rewind or search through the recording until the beginning of the recording is reached. The viewer may also rewind and display the first video stream V1. Meanwhile the broadcast of the remainder of the program may be sent to the storage device 18 since the viewer has shown an interest in the recording. This may be automatic (i.e., program streams are sent to storage device 18 upon a viewer's request for a replay) or may only occur upon receiving a request from the viewer to record the entire program.

Alternatively, a viewer may prefer not to be distracted by the live broadcast which is shown as being displayed in the PIP in Figure 7. Therefore, the viewer may simply first switch perspectives from V1 to V2 as shown in Figure 6a. After that, the viewer may "rewind" to an earlier event to see a previous scene from the perspective carried in video stream V2. This case is shown in Figure 7a where a copy of the live video stream V 1 is only sent to the storage device, along with the live video stream V2 and live audio stream A1. The recorded streams V2' and A1' are the only ones sent, possibly after modulation, to the television. The scenario presented in figures 6a and 7a could also be a scenario used by the viewer to switch between a live video perspective and a different, recorded, video perspective, when there is no PIP functionality associated with the viewer's television.

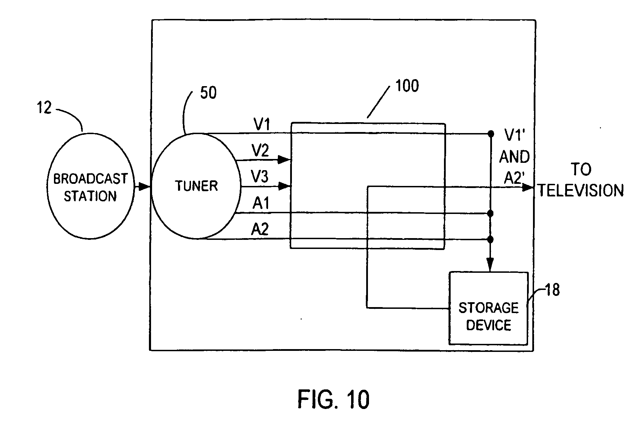

Figs. 8-10 illustrate a case where a program is broadcast with different perspective audio streams. For example, a viewer may be watching an Italian movie that is broadcast with an Italian audio stream A1 and an English audio stream A2. As shown in Fig. 8, video stream V and audio stream A1 are presented to the viewer and recorded in the storage device 18 while audio stream A2 is also recorded in the storage device 18 but not presented to the viewer. The viewer is initially listening to the Italian broadcast (audio stream A1); however, during part of the movie, the viewer does not understand the Italian, so he selects a "switch to English" option from a menu and the viewer now hears the English broadcast (audio stream A2) (Fig. 9). If the viewer wants to hear the soundtrack that accompanied the previous scene in English, he may rewind the tape of the video stream V1 and audio stream A2 and watch the scene over again in English (Fig. 10). The video and audio streams V1, A1, and A2 will continue to be recorded so that the viewer can see the rest of the movie in a deferred mode, without missing the portion of the movie that was broadcast while the viewer was rewinding and replaying the previous scene.

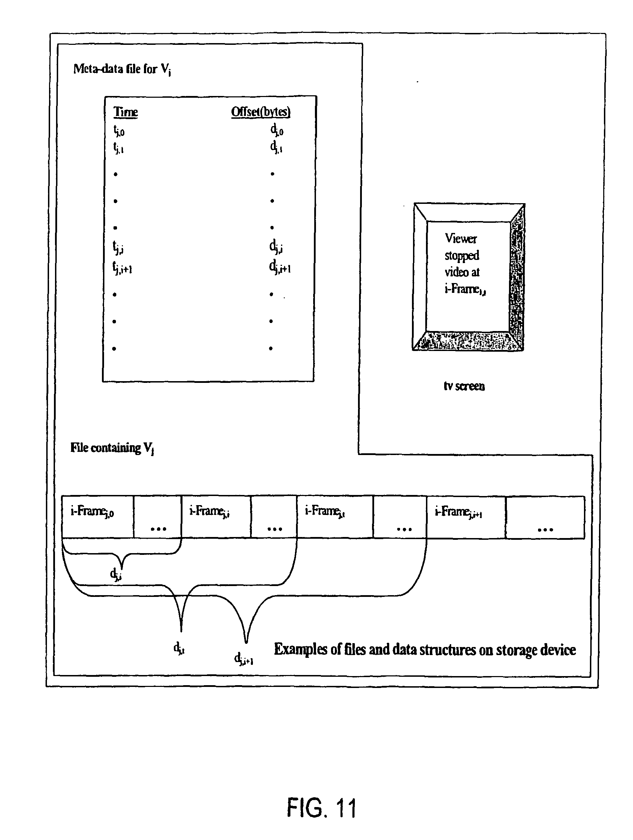

Fig. 11 shows an example of a meta-data file that can be stored along with each recorded perspective. This invention does not require the format shown in this figure, but the format is only used as an example of how meta-data can facilitate the playing of an instant replay from a different perspective. Each record of the meta-data file shown contains, among other possible fields, a time and an offset. In this example, a program clock reference is frequently, though not periodically, broadcast along with the video. When some of these clock reference values are received by the set top box, their value, along with the offset into the recording of the most recent I-frame (one of 3 types of MPEG-2 frame encodings that can be used for video), can be recorded as meta-data. Again, this is only an example; an actual implementation may make use of P- and B- frames (the other types of MPEG-2 encodings, both of which are typically more compressed than an I-frame). The offset is in terms of bytes measured from the beginning of the file containing the recording of the perspective.

In this example, the viewer has been watching a live broadcast that contains video perspective $V_1$. As the viewer watches, that video perspective, $V_1$ is being recorded to a file. Also, other video perspectives, including video perspective $V_2$, are being recorded to a different file because they represent a different view of the same information. Of course, $V_2$ could be recorded in the same file as long as other information distinguishing $V_1$ from $V_2$ is recorded somewhere. The viewer has just seen something interesting on the screen and enters the appropriate commands to cause $V_1$ to be re-wound to the beginning of the interesting scene. The viewer stops $V_1$ when the MPEG-2 I-Frame$_{1,t}$ is being used to display the contents of the screen. (Again, this is only an example. P- and B- frames could also be recorded in the file containing the I-frames from $V_1$, and could be used in locating a scene, but they are not used in this example. Also, MPEG-2 is only used as an example; other formats of media and/or data can equally well be used) The viewer then issues a command that tells the set top box to start playing forward, but from $V_2$ rather than from $V_1$. The set-top box must determine which I-frame of $V_2$ it should first cause to be displayed. A simple solution, choosing the I-frame nearest to the same offset as I-frame$_{1,t}$ in the file that contains $V_2$ would only work correctly if both perspectives were sent at the same constant rate, although such an approximation may be useful if the perspectives were sent at approximately the same non-constant rate. A better solution for either variable-rate streams or streams with different constant rates is now presented. This solution uses a linear interpolation, although other well-known classical interpolation methods that are readily available in the open literature may provide a better approximation under some circumstances.

First the actual time corresponding to the originally intended playing time of I-frame$_{1,t}$ is approximated. The offset into the file containing $V_1$ where I-frame$_{1,t}$ is located, $d_{1,t}$ is used for this approximation. In order to approximate this time, t, two consecutive offset values, $d_{1,i}$ and $d_{1,i+1}$, are searched for in the meta-data file, such that $d_{1,i} \leq d_{1,t} < d_{1,i+1}$. (As a practitioner of the art would know, a binary search would likely find these two consecutive elements the most quickly if the records are fixed length and the elements are stored in consecutive order as shown. A different search would be optimal if a different storage format is used. Again, these are well-known techniques that are extensively documented in the computer science literature.) Once they are located, both $t_{1,i}$ and $t_{1,i+1}$ will also be known. These values are then used to approximate t. This example uses the linear interpolation formula:

$$t = ( ( t_{1,i+1} - t_{1,i} ) ( d_{1,t} - d_{1,i} ) / ( d_{1,i+1} - d_{1,i} ) ) + t_{1,i}$$

After an approximation for t has been found, the location of the I-frame in the recording of perspective $V_2$ that is nearest to that time needs to be found. The first step here is to locate $t_{2,k}$ and $t_{2,k+1}$ such that $t_{2,k} \leq t < t_{2,k+1}$. Again, the search that performs the best in any given case is dependent upon the format of the file and is a well-studied problem. Having these values allows for an approximation of $d_2$,t. Once again, this example uses linear interpolation:

$$d_{2,t} = ( ( d_{2,j+1} - d_{2,j} ) ( t - t_{2,j} ) / ( t_{2, j+1} - t_{2,j} ) ) + d_{2,j}$$

Now that an approximation for $d_{2,t}$ is known, the I-frame that is nearest to being $d_{2,t}$ bytes from the beginning of the file containing the recording of $V_2$ is used as the starting frame for playing back the recording for the viewer.

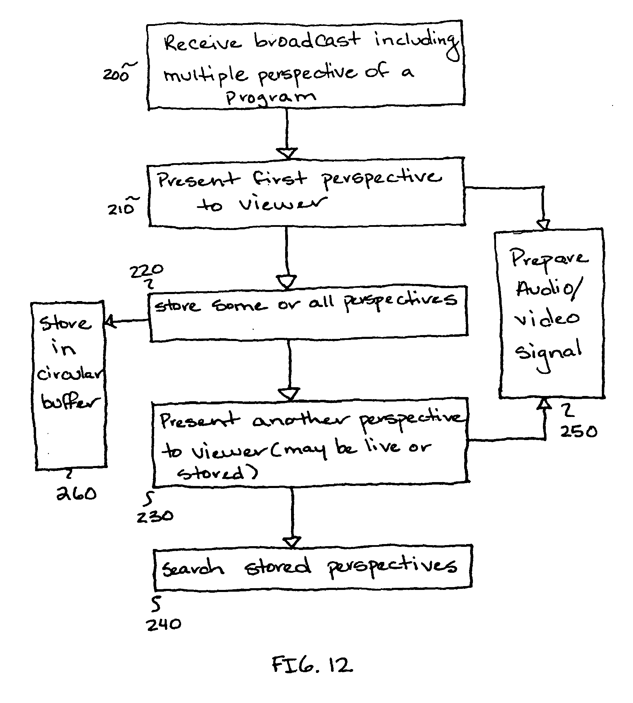

Fig. 12 shows a process flow in accordance with the embodiment described herein. For the sake of clarity, the process has been illustrated with a specific flow, but it should be understood that other sequences are possible and that some may be performed in parallel, without departing from the spirit of the invention. In step 200, the system receives a broadcast including multiple perspectives of a program. The system presents one of the perspectives to the viewer, step 210, and stores all of the perspectives in a storage device, step 220. In the embodiment disclosed, the system stores all of the perspectives, but may be configured to selectively store perspectives based on criteria provided by the viewer (such as an indication of which perspectives the viewer is interested in). The perspectives are stored in a circular buffer, step 260. Another perspective is presented to the viewer, step 230, and the presentation of this perspective and the first perspective includes preparation of an audio/video signal for the television, step 250. The presentation of the other perspective in step 230 may involve searching the stored perspectives, step 240, and the perspective presented may be one of the stored perspectives.

A method and system for processing broadcasts have been disclosed. Software written according to the present invention may be stored in some form of computer-readable medium, such as memory or CD-ROM, or transmitted over a network, and executed by a processor. Additionally, where methods have been disclosed, various sequences of steps may be possible, and it may be possible to perform such steps simultaneously, without departing from the scope of the invention.

Although the present invention has been described in accordance with the embodiments shown, one of ordinary skill in the art will readily recognize that there could be variations made to the embodiments without departing from the scope of the present invention. Accordingly, it is intended that all matter contained in the above description and shown in the accompanying drawings shall be interpreted as illustrative and not in a limiting sense.

**Claims**

**1.**  A method for processing broadcasts, comprising:

receiving a broadcast of a program, the broadcast containing a plurality of perspectives of the program (200);

presenting a first perspective of the plurality of perspectives to a viewer (210), said first perspective comprising a first perspective of a portion of the program;

storing at least said first and a second one of the plurality of perspectives (220);

the method **characterized by**:

    providing input from a viewer which indicates a desire to replay the portion of the program from a second perspective of the plurality of perspectives;

    identifying in the first perspective a first point in time in the program which corresponds to the beginning of said portion, responsive to the input;

    automatically determining a second point in time in the second perspective, wherein the second point in time comprises an approximation of the first point in time in the program;

    presenting the portion of the program from the second perspective to the viewer beginning at the second point in time (230); and

    periodically storing meta-data corresponding to each of said first and second of the received plurality of perspectives of the program, said meta-data comprising at least time and offset information for each of the corresponding said first and second one or more plurality of perspectives;

wherein the offset defines a location measured from the beginning of a recording of a corresponding perspective wherein identifying the first point in time in the first perspective comprises identifying a corresponding first offset in a stored file corresponding to the first perspective, and wherein determining the second point in time in the second perspective comprises:

    searching stored meta-data to identify two consecutive offsets corresponding to the first perspective, such that the interval represented by the two consecutive offsets includes the first offset;

    utilizing a stored time corresponding to each of the two consecutive offsets to determine by interpolation an approximation of the first point in time;

    searching stored meta-data to identify two consecutive times corresponding to the second perspective, such that the interval represented by the two consecutive times includes the approximation of the first point in time;

    utilizing a stored offset corresponding to each of the two consecutive times to determine an approximated offset in the second perspective corresponding to the second point in time.

2. The method as recited in claim 1, wherein presenting at least one of the plurality of perspectives includes presenting at least one of the stored perspectives.

3. The method as recited in claim 1, wherein receiving the broadcast includes receiving a plurality of related video streams, each stream including one of the perspectives.

4. The method as recited in claim 1, wherein presenting the first perspective includes presenting the first perspective in one window of a display and presenting at least one of the plurality of perspectives includes presenting a second perspective from the plurality of stored perspectives in a different window of the display.

5. The method as recited in claim 1, wherein determining the second point in time in the second perspective comprises locating an offset in the second perspective which is near the first offset.

6. A system for presenting broadcasts, comprising:

    a receiver (16) configured to receive a broadcast including a plurality of perspectives of a program;

    a storage device (18) for storing at least said first and a second one of the plurality of perspectives; and

    a processor (30) configured to present a first perspective to a viewer while presenting at least said second, stored perspective to the viewer;

**characterized in that** wherein in presenting the second, stored perspective, the processor is configured to:

    receive input from a viewer which indicates a desire to replay a portion of the program from the second perspective of the plurality of perspectives;

    identify in the first perspective a first point in time in the program which corresponds to the beginning of said portion, responsive to the input;

automatically determine a second point in time in the second perspective, wherein the second point in time comprises an approximation of the first point in time in the program; and

present the portion of the program from the second, stored perspective beginning at the second point in time; and periodically store meta-data corresponding to each of said first and second of the received plurality of perspectives of the program, said meta-data comprising at least time and offset information for each of the corresponding said first and second plurality of perspectives;

wherein the offset defines a location measured from the beginning of a recording of a corresponding perspective; wherein identifying the first point in time in the first perspective comprises identifying a corresponding first offset in a stored file corresponding to the first perspective, and wherein in determining the second point in time in the second perspective the processor is configured to:

search stored meta-data to identify two consecutive offsets corresponding to the first perspective, such that the interval represented by the two consecutive offsets includes the first offset;

utilize a stored time corresponding to each of the two consecutive offsets to determine by interpolation an approximation of the first point in time;

search stored meta-data to identify two consecutive times corresponding to the second perspective, such that the interval represented by the two consecutive times includes the approximation of the first point in time;

utilize a stored offset corresponding to each of the two consecutive times to determine an approximated offset in the second perspective corresponding to the second point in time.

7. The system as recited in claim 6, wherein the first perspective is a stored perspective.

8. The system as recited in claim 6, further configured to store the at least one perspective simultaneously with presenting the first perspective.

9. The system as recited in claim 6, further configured to store the at least one perspective simultaneously with presenting the second perspective.

10. The system as recited in claim 6, wherein the processor is configured to present the first perspective in a first window on the display and the second perspective in a second window on the display.

11. The system as recited in claim 10, wherein one of the first and second windows is nested inside the other of the first and second windows.

12. The system as recited in claim 10, wherein the receiver is configured to receive a plurality of audio and/or video streams associated with the plurality of perspectives.

13. The system as recited in claim 6, wherein each of the audio and/or video streams includes one of the perspectives.

14. The system as recited in claim 6, wherein determining the second point in time in the second perspective comprises locating an offset in the second perspective which is near the first offset.

15. The system as recited in claim 6, wherein the processor is configured to search at least one of the stored perspectives.

16. A computer program product for processing broadcasts, comprising a computer usable medium having machine readable code embodied therein for:

receiving a broadcast of a program, the broadcast containing a plurality of perspectives of the program; presenting a first perspective of the plurality of perspectives to a viewer, said first perspective comprising a first perspective of a portion of the program;

storing at least said first and a second one of the plurality of perspectives;

**characterized by**:

receiving input from a viewer which indicates a desire to replay the portion of the program from the second perspective of the plurality of perspectives;

identifying in the first perspective a first point in time in the program which corresponds to the beginning of said portion, responsive to the input;

automatically determining a second point in time in the second perspective, wherein the second point in time comprises an approximation of the first point in time in the program; and

presenting the portion of the program from the second perspective to the viewer beginning at the second point in time;

periodically storing meta-data corresponding to each of said first and second of the received plurality of perspectives of the program, said meta-data comprising at least time and offset information for each of the corresponding said first and second plurality of perspectives;

wherein the offset defines a location measured from the beginning of a recording of a corresponding perspective;

wherein identifying the first point in time in the first perspective comprises identifying a corresponding first offset in a stored file corresponding to the first perspective, and wherein determining the second point in time in the second perspective comprises:

searching stored meta-data to identify two consecutive offsets corresponding to the first perspective, such that the interval represented by the two consecutive offsets includes the first offset;

utilizing a stored time corresponding to each of the two consecutive offsets to determine by interpolation an approximation of the first point in time;

searching stored meta-data to identify two consecutive times corresponding to the second perspective, such that the interval represented by the two consecutive times includes the approximation of the first point in time;

utilizing a stored offset corresponding to each of the two consecutive times to determine an approximated offset in the second perspective corresponding to the second point in time.

17. The computer program product as recited in claim 16, wherein presenting at least one of the plurality of perspectives includes presenting at least one of the stored perspectives.

18. The computer program product as recited in claim 17, wherein presenting at least one of the plurality of perspectives and storing at least one of the plurality of perspectives are performed simultaneously.

19. The computer program product as recited in claim 22, wherein determining the second point in time in the second perspective comprises locating an offset in the second perspective which is near the first offset.

20. The computer program product as recited in claim 16, wherein receiving the broadcast includes receiving a plurality of related audio and/or video streams, each stream including one of the perspectives.

21. The computer program product as recited in claim 16, wherein presenting the first perspective includes presenting the first perspective in one window of a display and presenting at least one of the plurality of perspectives includes presenting a second perspective from the plurality of stored perspectives in a different window of the display.

22. The computer program product as recited in claim 16, wherein storing at least one of the plurality of perspectives includes storing the perspectives in at least one circular buffer.

23. The method as recited in claim 1, or the computer program product as recited in claim 16, wherein presenting the first perspective and storing are performed simultaneously.

24. The method as recited in claim 1, or the system as recited in claim 6, wherein storing the at least one of the plurality of perspectives is performed automatically.

25. The method as recited in claim 1, or the system as recited in claim 6, wherein storing at least one of the plurality of perspectives includes storing the perspectives in at least one circular buffer.

26. The method as recited in claim 5, the system as recited in claim 14, or the computer program product as recited in claim 19 wherein the plurality of perspectives of the program comprise MPEG data streams, and wherein the offset in the second perspective which is near the first offset corresponds to an MPEG I-frame.

27. The method as recited in claim 1, the system as recited in claim 6, or the computer program product as recited in claim 16, wherein the plurality of perspectives of the program comprise MPEG data streams, and wherein the offset in the second perspective which is near the approximated offset corresponds to an MPEG I-frame.

28. The method as recited in claim 1, system as recited in claim 6, or computer program product as recited in claim 16, wherein receiving the broadcast includes simultaneously receiving a plurality of related video streams, each stream including one of the perspectives, wherein said streams do not have a same bit rate.

29. The method, system, or computer program product as recited in claim 28, wherein said locating comprises performing interpolation.


**Patentansprüche**

1. Verfahren zur Verarbeitung von Fernsehsendungen, das Folgendes umfasst:

   Empfangen einer Fernsehsendung eines Programms, wobei die Fernsehsendung eine Vielzahl von Perspektiven des Programms (200) enthält;
   einem Zuschauer (210) eine erste Perspektive der Vielzahl von Perspektiven darstellen, wobei die erste Perspektive eine erste Perspektive eines Abschnitts des Programms umfasst;
   Speichern mindestens der ersten und einer zweiten der Vielzahl von Perspektiven (220); wobei das Verfahren **gekennzeichnet ist durch**:

   Bereitstellen einer Eingabe von einem Zuschauer, der den Wunsch anzeigt, den Abschnitt des Programms aus einer zweiten Perspektive der Vielzahl von Perspektiven wiederzugeben;
   Identifizieren in der ersten Perspektive eines ersten Zeitpunkts in dem Programm, der dem Beginn des Abschnitts entspricht, als Reaktion auf die Eingabe;
   automatisches Ermitteln eines zweiten Zeitpunkts in der zweiten Perspektive, wobei der zweite Zeitpunkt eine Annäherung des ersten Zeitpunkts in dem Programm umfasst;
   dem Zuschauer den Abschnitt des Programms aus der zweiten Perspektive beginnend bei dem zweiten Zeitpunkt (230) darstellen; und
   regelmäßiges Speichern von Metadaten, die jeder der ersten und zweiten der empfangenen Vielzahl von Perspektiven des Programms entsprechen, wobei die Metadaten mindestens Zeit- und Versatzinformationen für jede entsprechende erste und zweite oder mehr der Vielzahl von Perspektiven umfassen;

   wobei der Versatz eine Position definiert, die von dem Beginn einer Aufnahme einer entsprechenden Perspektive gemessen wird,
   wobei das Identifizieren des ersten Zeitpunkts in der ersten Perspektive das Identifizieren eines entsprechenden ersten Versatzes in einer gespeicherten Datei umfasst, der der ersten Perspektive entspricht, und wobei die Ermittlung des zweiten Zeitpunkts in der zweiten Perspektive Folgendes umfasst:

   das Suchen nach gespeicherten Metadaten, um zwei aufeinanderfolgende Versätze zu identifizieren, die der ersten Perspektive entsprechen, so dass das Intervall, das **durch** die beiden aufeinanderfolgenden Versätze dargestellt wird, den ersten Versatz umfasst;
   die Verwendung einer gespeicherten Zeit, die jedem der beiden aufeinanderfolgenden Versätze entspricht, um **durch** Interpolation eine Annäherung des ersten Zeitpunkts zu ermitteln;
   das Suchen nach gespeicherten Metadaten, um zwei aufeinanderfolgende Zeiten zu identifizieren, die der zweiten Perspektive entsprechen, so dass das Intervall, das durch die beiden aufeinanderfolgenden Zeiten dargestellt wird, die Annäherung des ersten Zeitpunkts umfasst;
   die Verwendung eines gespeicherten Versatzes, der jedem der beiden aufeinanderfolgenden Zeiten entspricht, um einen angenäherten Versatz in der zweiten Perspektive zu ermitteln, die dem zweiten Zeitpunkt entspricht.

2. Verfahren nach Anspruch 1, wobei die Darstellung mindestens einer der Vielzahl von Perspektiven die Darstellung mindestens einer der gespeicherten Perspektiven umfasst.

3. Verfahren nach Anspruch 1, wobei der Empfang der Fernsehsendung den Empfang einer Vielzahl von diesbezüglichen Videoströmen umfasst, wobei jeder Strom eine der Perspektiven umfasst.

4. Verfahren nach Anspruch 1, wobei die Darstellung der ersten Perspektive die Darstellung der ersten Perspektive in einem Fenster eines Bildschirms umfasst und die Darstellung mindestens einer der Vielzahl von Perspektiven die Darstellung einer zweiten Perspektive aus der Vielzahl von gespeicherten Perspektiven in einem anderen Fenster des Bildschirms umfasst.

5. Verfahren nach Anspruch 1, wobei die Ermittlung des zweiten Zeitpunkts in der zweiten Perspektive das Auffinden eines Versatzes in der zweiten Perspektive umfasst, der sich in der Nähe des ersten Versatzes befindet.

6. System zur Darstellung von Fernsehsendungen, das Folgendes umfasst:

> einen Empfänger (16), der so konfiguriert ist, dass er eine Fernsehsendung empfängt, die eine Vielzahl von Perspektiven eines Programms enthält;
> eine Speichervorrichtung (18) zum Speichern mindestens der ersten und einer zweiten der Vielzahl von Perspektiven; und
> einen Prozessor (30), der so konfiguriert ist, dass er einem Zuschauer eine erste Perspektive darstellt, während dem Zuschauer mindestens die zweite gespeicherte Perspektive dargestellt wird;

> **dadurch gekennzeichnet, dass** der Prozessor bei der Darstellung der zweiten gespeicherten Perspektive für Folgendes konfiguriert ist:

> > Empfang einer Eingabe von einem Zuschauer, der den Wunsch anzeigt, einen Abschnitt des Programms aus einer zweiten Perspektive der Vielzahl von Perspektiven wiederzugeben;
> > Identifizieren in der ersten Perspektive eines ersten Zeitpunkts in dem Programm, der dem Beginn des Abschnitts entspricht, als Reaktion auf die Eingabe;
> > automatisches Ermitteln eines zweiten Zeitpunkts in der zweiten Perspektive, wobei der zweite Zeitpunkt eine Annäherung des ersten Zeitpunkts in dem Programm umfasst; und
> > Darstellen des Abschnitts des Programms aus der zweiten gespeicherten Perspektive beginnend bei dem zweiten Zeitpunkt; und
> > regelmäßiges Speichern der Metadaten, die jeder der ersten und zweiten der empfangenen Vielzahl von Perspektiven des Programms entsprechen, wobei die Metadaten mindestens Zeit- und Versatzinformationen für jede entsprechende erste und zweite Vielzahl von Perspektiven umfassen;

> wobei der Versatz eine Position definiert, die von dem Beginn einer Aufnahme einer entsprechenden Perspektive gemessen wird;
> wobei das Identifizieren des ersten Zeitpunkts in der ersten Perspektive das Identifizieren eines entsprechenden ersten Versatzes in einer gespeicherten Datei umfasst, der der ersten Perspektive entspricht, und wobei der Prozessor bei der Ermittlung des zweiten Zeitpunkts in der zweiten Perspektive für Folgendes konfiguriert ist:

> > das Suchen nach gespeicherten Metadaten, um zwei aufeinanderfolgende Versätze zu identifizieren, die der ersten Perspektive entsprechen, so dass das Intervall, das durch die beiden aufeinanderfolgenden Versätze dargestellt wird, den ersten Versatz umfasst;
> > die Verwendung einer gespeicherten Zeit, die jedem der beiden aufeinanderfolgenden Versätze entspricht, um durch Interpolation eine Annäherung des ersten Zeitpunkts zu ermitteln;
> > das Suchen nach gespeicherten Metadaten, um zwei aufeinanderfolgende Zeiten zu identifizieren, die der zweiten Perspektive entsprechen, so dass das Intervall, das durch die beiden aufeinanderfolgenden Zeiten dargestellt wird, die Annäherung des ersten Zeitpunkts umfasst;
> > die Verwendung eines gespeicherten Versatzes, der jedem der beiden aufeinanderfolgenden Zeiten entspricht, um einen angenäherten Versatz in der zweiten Perspektive zu ermitteln, die dem zweiten Zeitpunkt entspricht.

7. System nach Anspruch 6, wobei die erste Perspektive eine gespeicherte Perspektive ist.

8. System nach Anspruch 6, das des Weiteren dafür konfiguriert ist, die mindestens eine Perspektive gleichzeitig zu der Darstellung der ersten Perspektive zu speichern.

9. System nach Anspruch 6, das des Weiteren dafür konfiguriert ist, die mindestens eine Perspektive gleichzeitig zu der Darstellung der zweiten Perspektive zu speichern.

10. System nach Anspruch 6, wobei der Prozessor dafür konfiguriert ist, die erste Perspektive in einem ersten Fenster auf dem Bildschirm und die zweite Perspektive in einen zweiten Fenster auf dem Bildschirm darzustellen.

11. System nach Anspruch 10, wobei das erste oder zweite Fenster innerhalb des anderen zweiten oder ersten Fensters verschachtelt angeordnet ist.

12. System nach Anspruch 10, wobei der Empfänger so konfiguriert ist, dass er eine Vielzahl von Audio- und/oder Videoströmen empfängt, die der Vielzahl von Perspektiven zugeordnet ist.

13. System nach Anspruch 6, wobei jeder der Audio- und/oder Videoströme eine der Perspektiven umfasst.

14. System nach Anspruch 6, wobei die Ermittlung des zweiten Zeitpunkts in der zweiten Perspektive das Auffinden eines Versatzes in der zweiten Perspektive umfasst, der sich in der Nähe des ersten Versatzes befindet.

15. System nach Anspruch 6, wobei der Prozessor so konfiguriert ist, dass er mindestens eine der gespeicherten Perspektiven sucht.

16. Computerprogrammprodukt zur Verarbeitung von Fernsehsendungen, das ein computerverwendbares Medium umfasst, in dem maschinenlesbarer Code für Folgendes realisiert ist:

Empfangen einer Fernsehsendung eines Programms, wobei die Fernsehsendung eine Vielzahl von Perspektiven des Programms enthält;
einem Zuschauer eine erste Perspektive der Vielzahl von Perspektiven darstellen, wobei die erste Perspektive eine erste Perspektive eines Abschnitts des Programms umfasst;
Speichern mindestens der ersten und einer zweiten der Vielzahl von Perspektiven;

**gekennzeichnet durch**:

Empfangen einer Eingabe von einem Zuschauer, der den Wunsch anzeigt, den Abschnitt des Programms aus der zweiten Perspektive der Vielzahl von Perspektiven wiederzugeben;
Identifizieren in der ersten Perspektive eines ersten Zeitpunkts in dem Programm, der dem Beginn des Abschnitts entspricht, als Reaktion auf die Eingabe;
automatisches Ermitteln eines zweiten Zeitpunkts in der zweiten Perspektive, wobei der zweite Zeitpunkt eine Annäherung des ersten Zeitpunkts in dem Programm umfasst;
dem Zuschauer den Abschnitt des Programms aus der zweiten Perspektive beginnend bei dem zweiten Zeitpunkt darstellen;
regelmäßiges Speichern von Metadaten, die jeder der ersten und zweiten der empfangenen Vielzahl von Perspektiven des Programms entsprechen, wobei die Metadaten mindestens Zeit- und Versatzinformationen für jede entsprechende erste und zweite Vielzahl von Perspektiven umfassen;

wobei der Versatz eine Position definiert, die von dem Beginn einer Aufnahme einer entsprechenden Perspektive gemessen wird,
wobei das Identifizieren des ersten Zeitpunkts in der ersten Perspektive das Identifizieren eines entsprechenden ersten Versatzes in einer gespeicherten Datei umfasst, der der ersten Perspektive entspricht, und wobei die Ermittlung des zweiten Zeitpunkts in der zweiten Perspektive Folgendes umfasst:

das Suchen nach gespeicherten Metadaten, um zwei aufeinanderfolgende Versätze zu identifizieren, die der ersten Perspektive entsprechen, so dass das Intervall, das **durch** die beiden aufeinanderfolgenden Versätze dargestellt wird, den ersten Versatz umfasst;
die Verwendung einer gespeicherten Zeit, die jedem der beiden aufeinanderfolgenden Versätze entspricht, um **durch** Interpolation eine Annäherung des ersten Zeitpunkts zu ermitteln;
das Suchen nach gespeicherten Metadaten, um zwei aufeinanderfolgende Zeiten zu identifizieren, die der zweiten Perspektive entsprechen, so dass das Intervall, das durch die beiden aufeinanderfolgenden Zeiten dargestellt wird, die Annäherung des ersten Zeitpunkts umfasst;
die Verwendung eines gespeicherten Versatzes, der jedem der beiden aufeinanderfolgenden Zeiten entspricht, um einen angenäherten Versatz in der zweiten Perspektive zu ermitteln, die dem zweiten Zeitpunkt entspricht.

17. Computerprogrammprodukt nach Anspruch 16, wobei die Darstellung mindestens einer der Vielzahl von Perspektiven die Darstellung mindestens einer der gespeicherten Perspektiven umfasst.

18. Computerprogrammprodukt nach Anspruch 17, wobei die Darstellung mindestens einer der Vielzahl von Perspektiven und das Speichern mindestens einer der Vielzahl von Perspektiven gleichzeitig durchgeführt werden.

19. Computerprogrammprodukt nach Anspruch 22, wobei die Ermittlung des zweiten Zeitpunkts in der zweiten Perspektive das Auffinden eines Versatzes in der zweiten Perspektive umfasst, der sich in der Nähe des ersten Versatzes befindet.

20. Computerprogrammprodukt nach Anspruch 16, wobei der Empfang der Fernsehsendung den Empfang einer Vielzahl von diesbezüglichen Audio- und/oder Videoströmen umfasst, wobei jeder Strom eine der Perspektiven umfasst.

21. Computerprogrammprodukt nach Anspruch 16, wobei die Darstellung der ersten Perspektive die Darstellung der ersten Perspektive in einem Fenster eines Bildschirms umfasst und die Darstellung mindestens einer der Vielzahl von Perspektiven die Darstellung einer zweiten Perspektive aus der Vielzahl von gespeicherten Perspektiven in einem anderen Fenster des Bildschirms umfasst.

22. Computerprogrammprodukt nach Anspruch 16, wobei das Speichern mindestens einer der Vielzahl von Perspektiven das Speichern der Perspektiven in mindestens einem Ringpuffer umfasst.

23. Verfahren nach Anspruch 1 oder Computerprogrammprodukt nach Anspruch 16,
wobei die Darstellung der ersten Perspektive und das Speichern gleichzeitig durchgeführt werden.

24. Verfahren nach Anspruch 1 oder System nach Anspruch 6, wobei das Speichern der mindestens einen der Vielzahl von Perspektiven automatisch durchgeführt wird.

25. Verfahren nach Anspruch 1 oder System nach Anspruch 6, wobei das Speichern mindestens einer der Vielzahl von Perspektiven das Speichern der Perspektiven in mindestens einem Ringpuffer umfasst.

26. Verfahren nach Anspruch 5, System nach Anspruch 14 oder Computerprogrammprodukt nach Anspruch 19, wobei die Vielzahl von Perspektiven des Programms MPEG-Datenströme umfasst und der Versatz in der zweiten Perspektive, der sich in der Nähe des ersten Versatzes befindet, einem MPEG-I-Einzelbild entspricht.

27. Verfahren nach Anspruch 1, System nach Anspruch 6 oder Computerprogrammprodukt nach Anspruch 16, wobei die Vielzahl von Perspektiven des Programms MPEG-Datenströme umfasst und der Versatz in der zweiten Perspektive, der sich in der Nähe des angenäherten Versatzes befindet, einem MPEG-I-Einzelbild entspricht.

28. Verfahren nach Anspruch 1, System nach Anspruch 6 oder Computerprogrammprodukt nach Anspruch 16, wobei der Empfang der Fernsehsendung den gleichzeitigen Empfang einer Vielzahl von diesbezüglichen Videoströmen umfasst, wobei jeder Strom eine der Perspektiven umfasst und die Ströme nicht dieselbe Bitrate aufweisen.

29. Verfahren, System oder Computerprogrammprodukt nach Anspruch 28, wobei das Auffinden die Durchführung einer Interpolation umfasst.

**Revendications**

1. Un procédé destiné au traitement d'émissions comprenant :

la réception d'une émission d'un programme, l'émission comportant une pluralité d'angles de prise de vue du programme (200),
la présentation d'un premier angle de prise de vue de la pluralité des angles de prise de vue à un téléspectateur (210), ledit premier angle de prise de vue comprenant un premier angle de prise de vue d'une partie du programme, la mise en mémoire d'au moins ledit premier et un deuxième angles de prise de vue de la pluralité des angles de prise de vue (220),
le procédé étant **caractérisé par** :

la fourniture d'une entrée provenant d'un téléspectateur qui indique un souhait de repasser la partie du programme à partir d'un deuxième angle de prise de vue de la pluralité des angles de prise de vue,
l'identification dans le premier angle de prise de vue d'un premier instant donné dans le programme qui correspond au début de ladite partie, en réponse à l'entrée,
la détermination automatique d'un deuxième instant donné dans le deuxième angle de prise de vue où le deuxième instant donné comprend une approximation du premier instant donné dans le programme,
la présentation de la partie du programme à partir du deuxième angle de prise de vue au téléspectateur débutant au deuxième instant donné (230), et

la mise en mémoire périodique de métadonnées correspondant à chacun desdits premier et deuxième angles de prise de vue de la pluralité des angles de prise de vue reçue du programme, lesdites métadonnées comprenant au moins des informations temporelles et de décalage pour chacune desdites première et deuxième pluralités ou plus d'angles de prise de vue correspondantes,

où le décalage définit un emplacement mesuré à partir du début d'un enregistrement d'un angle de prise de vue correspondant,

où l'identification du premier instant donné dans le premier angle de prise de vue comprend l'identification d'un premier décalage correspondant dans un fichier conservé en mémoire correspondant au premier angle de prise de vue, et où la détermination du deuxième instant donné dans

le deuxième angle de prise de vue comprend :

la consultation de métadonnées conservées en mémoire afin d'identifier deux décalages consécutifs correspondant au premier angle de prise de vue, de sorte que l'intervalle représenté par les deux décalages consécutifs inclut le premier décalage,

l'utilisation d'un instant conservé en mémoire correspondant à chacun des deux décalages consécutifs afin de déterminer par interpolation une approximation du premier instant donné,

la consultation de métadonnées conservées en mémoire afin d'identifier deux instants consécutifs correspondant au deuxième angle de prise de vue, de sorte que l'intervalle représenté par les deux instants consécutifs inclut l'approximation du premier instant donné, l'utilisation d'un décalage conservé en mémoire correspondant à chacun des deux instants consécutifs afin de déterminer un décalage approché dans le deuxième angle de prise de vue correspondant au deuxième instant donné.

2. Le procédé selon la Revendication 1, où la présentation d'au moins un angle de prise de vue de la pluralité des angles de prise de vue comprend la présentation d'au moins un des angles de prise de vue conservés en mémoire.

3. Le procédé selon la Revendication 1, où la réception de l'émission comprend la réception d'une pluralité de trains de données vidéo associés, chaque train de données comprenant l'un des angles de prise de vue.

4. Le procédé selon la Revendication 1, où la présentation du premier angle de prise de vue comprend la présentation du premier angle de prise de vue dans une fenêtre d'un écran et la présentation d'au moins un angle de prise de vue de la pluralité des angles de prise de vue comprend la présentation d'un deuxième angle de prise de vue de la pluralité des angles de prise de vue conservés en mémoire dans une fenêtre différente de l'écran.

5. Le procédé selon la Revendication 1, où la détermination du deuxième instant donné dans le deuxième angle de prise de vue comprend le repérage d'un décalage dans le deuxième angle de prise de vue qui se trouve près du premier décalage.

6. Un système destiné à la présentation d'émissions comprenant :

un récepteur (16) configuré de façon à recevoir une émission comprenant une pluralité d'angles de prise de vue d'un programme,

un dispositif de stockage (18) destiné à conserver en mémoire au moins ledit premier et un deuxième angles de prise de vue de la pluralité des angles de prise de vue, et

un processeur (30) configuré de façon à présenter un premier angle de prise de vue à un téléspectateur tout en présentant au moins ledit deuxième angle de prise de vue conservé en mémoire au téléspectateur,

**caractérisé en ce que**, pour la présentation du deuxième angle de prise de vue conservé en mémoire, le processeur est configuré de façon à :

recevoir une entrée d'un téléspectateur qui indique un souhait de repasser une partie du programme à partir du deuxième angle de prise de vue de la pluralité des angles de prise de vue,

identifier dans le premier angle de prise de vue un premier instant donné dans le programme qui correspond au début de ladite partie, en réponse à l'entrée,

déterminer automatiquement un deuxième instant donné dans le deuxième angle de prise de vue où le deuxième instant donné comprend une approximation du premier instant donné dans le programme, et

présenter la partie du programme à partir du deuxième angle de prise de vue conservé en mémoire débutant au deuxième instant donné, et

placer en mémoire périodiquement des métadonnées correspondant à chacun desdits premier et deuxième angles de prise de vue de la pluralité des angles de prise de vue reçue du programme, lesdites métadonnées comprenant au moins des informations temporelles et de décalage pour chacune desdites première et deuxième pluralités d'angles de prise de vue,

où le décalage définit un emplacement mesuré à partir du début d'un enregistrement d'un angle de prise de vue correspondant,

où l'identification du premier instant donné dans le premier angle de prise de vue comprend l'identification d'un premier décalage correspondant dans un fichier conservé en mémoire correspondant au premier angle de prise de vue, et où pour la détermination du deuxième instant donné dans le deuxième angle de prise de vue, le processeur est configuré de façon à :

consulter des métadonnées conservées en mémoire afin d'identifier deux décalages consécutifs correspondant au premier angle de prise de vue, de sorte que l'intervalle représenté par les deux décalages consécutifs inclut le premier décalage,

utiliser un instant conservé en mémoire correspondant à chacun des deux décalages consécutifs afin de déterminer par interpolation une approximation du premier instant donné,

consulter des métadonnées conservées en mémoire afin d'identifier deux instants consécutifs correspondant au deuxième angle de prise de vue, de sorte que l'intervalle représenté par les deux instants consécutifs inclut l'approximation du premier instant donné,

utiliser un décalage conservé en mémoire correspondant à chacun des deux instants consécutifs afin de déterminer un décalage approché dans le deuxième angle de prise de vue correspondant au deuxième instant donné.

7. Le système selon la Revendication 6, où le premier angle de prise de vue est un angle de prise de vue conservé en mémoire.

8. Le système selon la Revendication 6, configuré en outre pour conserver en mémoire le au moins un angle de prise de vue simultanément avec la présentation du premier angle de prise de vue.

9. Le système selon la Revendication 6, configuré en outre pour conserver en mémoire le au moins un angle de prise de vue simultanément avec la présentation du deuxième angle de prise de vue.

10. Le système selon la Revendication 6, où le processeur est configuré de façon à présenter le premier angle de prise de vue dans une première fenêtre de l'écran et le deuxième angle de prise de vue dans une deuxième fenêtre de l'écran.

11. Le système selon la Revendication 10, où l'une des première et deuxième fenêtres est imbriquée à l'intérieur de l'autre des première et deuxième fenêtres.

12. Le système selon la Revendication 10, où le récepteur est configuré de façon à recevoir une pluralité de trains de données audio et/ou vidéo associés à la pluralité des angles de prise de vue.

13. Le système selon la Revendication 6, où chacun des trains de données audio et/ou vidéo comprend l'un des angles de prise de vue.

14. Le système selon la Revendication 6, où la détermination du deuxième instant donné dans le deuxième angle de prise de vue comprend le repérage d'un décalage dans le deuxième angle de prise de vue qui se trouve près du premier décalage.

15. Le système selon la Revendication 6, où le processeur est configuré de façon à rechercher au moins un des angles de prise de vue conservés en mémoire.

16. Un programme informatique destiné au traitement d'émissions, comprenant un support utilisable par ordinateur contenant du code lisible par ordinateur enregistré sur celui-ci afin de :

recevoir une émission d'un programme, l'émission comportant une pluralité d'angles de prise de vue du programme,

présenter un premier angle de prise de vue de la pluralité des angles de prise de vue à un téléspectateur, ledit premier angle de prise de vue comprenant un premier angle de prise de vue d'une partie du programme,

mettre en mémoire au moins lesdits premier et deuxième angles de prise de vue de la pluralité des angles de prise de vue,

**caractérisé par** :

la réception d'une entrée provenant d'un téléspectateur qui indique un souhait de repasser la partie du programme à partir du deuxième angle de prise de vue de la pluralité des angles de prise de vue,

l'identification dans le premier angle de prise de vue d'un premier instant donné dans le programme qui correspond au début de ladite partie, en réponse à l'entrée,

la détermination automatique d'un deuxième instant donné dans le deuxième angle de prise de vue où le deuxième instant donné comprend une approximation du premier instant donné dans le programme, et

la présentation de la partie du programme à partir du deuxième angle de prise de vue au téléspectateur débutant au deuxième instant donné,

la mise en mémoire périodique de métadonnées correspondant à chacun desdits premier et deuxième angles de prise de vue de la pluralité des angles de prise de vue reçue du programme, lesdites métadonnées comprenant au moins des informations temporelles et de décalage pour chacune desdites première et deuxième pluralités d'angles de prise de vue correspondantes,

où le décalage définit un emplacement mesuré à partir du début d'un enregistrement d'un angle de prise de vue correspondant,

où l'identification du premier instant donné dans le premier angle de prise de vue comprend l'identification d'un premier décalage correspondant dans un fichier conservé en mémoire correspondant au premier angle de prise de vue, et où la détermination du deuxième instant donné dans le deuxième angle de prise de vue comprend :

la consultation de métadonnées conservées en mémoire afin d'identifier deux décalages consécutifs correspondant au premier angle de prise de vue, de sorte que l'intervalle représenté par les deux décalages consécutifs inclut le premier décalage,

l'utilisation d'un instant conservé en mémoire correspondant à chacun des deux décalages consécutifs afin de déterminer par interpolation une approximation du premier instant donné,

la consultation de métadonnées conservées en mémoire afin d'identifier deux instants consécutifs correspondant au deuxième angle de prise de vue, de sorte que l'intervalle représenté par les deux instants consécutifs inclut l'approximation du premier instant donné,

l'utilisation d'un décalage conservé en mémoire correspondant à chacun des deux instants consécutifs afin de déterminer un décalage approché dans le deuxième angle de prise de vue correspondant au deuxième instant donné.

17. Le programme informatique selon la Revendication 16, où la présentation d'au moins un angle de prise de vue de la pluralité des angles de prise de vue comprend la présentation d'au moins un des angles de prise de vue conservés en mémoire.

18. Le programme informatique selon la Revendication 17, où la présentation d'au moins un angle de prise de vue de la pluralité des angles de prise de vue et la mise en mémoire d'au moins un angle de prise de vue de la pluralité des angles de prise de vue sont exécutées simultanément.

19. Le programme informatique selon la Revendication 22, où la détermination du deuxième instant donné dans le deuxième angle de prise de vue comprend le repérage d'un décalage dans le deuxième angle de prise de vue qui se trouve près du premier décalage.

20. Le programme informatique selon la Revendication 16, où la réception de l'émission comprend la réception d'une pluralité de trains de données audio et/ou vidéo associés, chaque train de données comprenant l'un des angles de prise de vue.

21. Le programme informatique selon la Revendication 16, où la présentation du premier angle de prise de vue comprend la présentation du premier angle de prise de vue dans une fenêtre d'un écran et la présentation d'au moins un angle de prise de vue de la pluralité des angles de prise de vue comprend la présentation d'un deuxième angle de prise de vue de la pluralité des angles de prise de vue conservés en mémoire dans une fenêtre différente de l'écran.

22. Le programme informatique selon la Revendication 16, où la mise en mémoire d'au moins un angle de prise de vue de la pluralité des angles de prise de vue comprend la mise en mémoire des angles de prise de vue dans au moins une mémoire tampon circulaire.

23. Le procédé selon la Revendication 1 ou le programme informatique selon la Revendication 16 où la présentation du premier angle de prise de vue et sa mise en mémoire sont exécutées simultanément.

24. Le procédé selon la Revendication 1 ou le système selon la Revendication 6,
où la mise en mémoire du au moins un angle de prise de vue de la pluralité des angles de prise de vue est exécutée automatiquement.

25. Le procédé selon la Revendication 1 ou le système selon la Revendication 6, où la mise en mémoire d'au moins un angle de prise de vue de la pluralité des angles de prise de vue inclut la mise en mémoire des angles de prise de vue dans au moins une mémoire tampon circulaire.

26. Le procédé selon la Revendication 5, le système selon la Revendication 14 ou le programme informatique selon la Revendication 19, où la pluralité des angles de prise de vue du programme comprend des trains de données MPEG et où le décalage du deuxième angle de prise de vue qui est près du premier décalage correspond à une trame MPEG I.

27. Le procédé selon la Revendication 1, le système selon la Revendication 6 ou le programme informatique selon la Revendication 16, où la pluralité des angles de prise de vue du programme comprend des trains de données MPEG et où le décalage du deuxième angle de prise de vue qui est près du décalage approché correspond à une trame MPEG I.

28. Le procédé selon la Revendication 1, le système selon la Revendication 6 ou le programme informatique selon la Revendication 16, où la réception de l'émission comprend la réception simultanée d'une pluralité de trains de données vidéo associés, chaque train de données comprenant l'un des angles de prise de vue, où lesdits trains de données ne présentent pas le même débit binaire.

29. Le procédé, système ou programme informatique selon la Revendication 28, où ladite opération de repérage comprend l'exécution d'une opération d'interpolation.

SATELLITE

BROADCAST STATION

RECEIVING
STATION

SET TOP
BOX

STORAGE
DEVICE

TV

FIG. 1

EP 1 266 521 B1

FIG. 2

FIG. 3

FIG. 4

FIG. 5

FIG. 6

FIG. 7

FIG. 6a

FIG. 7a

FIG. 8

FIG. 9

FIG. 10

**FIG. 11**

200~ Receive broadcast including multiple perspective of a Program

210~ Present first perspective to viewer

220 store some or all perspectives

260 Store in circular buffer

250 Prepare Audio/ video signal

230 Present another perspective to viewer (may be live or stored)

240 Search stored perspectives

FIG. 12

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6678463 B
- EP 0847197 A
- EP 0677842 A

- US 5999698 A
- US 630646 A
- US 162490 P